Europäisches Patentamt

European Patent Office

Office européen des brevets

(11) Publication number: **0 345 046**
**A2**

# EUROPEAN PATENT APPLICATION

(21) Application number: **89305492.4**

(22) Date of filing: **31.05.89**

(51) Int. Cl.⁴: **G 02 F 1/133**

(30) Priority: **01.06.88 GB 8812956**

(43) Date of publication of application:
**06.12.89 Bulletin 89/49**

(84) Designated Contracting States:
**AT BE CH DE ES FR GB GR IT LI LU NL SE**

(71) Applicant: **THORN EMI plc**
**4 Tenterden Street**
**London W1A 2AY (GB)**

(72) Inventor: **White, John Charles**
**8 Bishops Wood**
**Cuddesdon Oxford (GB)**

(74) Representative: **Fleming, Ian Alexander et al**
**THORN EMI Patents Limited The Quadrangle Westmount**
**Centre Uxbridge Road**
**Hayes Middlesex, UB4 0HB (GB)**

(54) **Display device.**

(57) A method of manufacturing a liquid crystal cell comprises
the steps of:

a) applying material over a first electrode layer (1) on a
substrate (2) to form a buffer layer (4);

b) applying material to form a second electrode layer (7)
such that the buffer layer (4) is intermediate the first and
second electrode layers;

and then removing portions of the buffer layer (4) to
provide regions for accommodating liquid crystal material.

FIG.3

EP 0 345 046 A2

Description

## DISPLAY DEVICE

The present invention relates to a method of manufacturing a liquid crystal cell and to a liquid crystal cell made by that method.

Specific classes of liquid crystal (e.g. smectic C -ferroelectric) require accurate control of the electrode-electrode spacing for large area manufacture of displays utilizing such material.

One form of conventional spacing technology employs deformable 'plastic' spheres or fibres distributed in a non-uniform fashion across the surface of one electrode. The top electrode is placed on top of the spacers and glued into position after filling the 'gap' with liquid crystal.

This fabrication sequence lacks control of the spacing tolerance and is susceptible to dust and particulates reducing manufacturing yield.

In another conventional technique, thin film deposition is used to apply an insulating layer on an electrode layer on a plate, and the insulating layer is then etched to leave only spacers, and the two plates are assembled together.

The present invention provides a method of manufacturing a liquid crystal cell comprising applying material over an electrode layer on a substrate to form a buffer layer, applying material to form a second electrode layer such that the buffer layer is intermediate the two electrode layers, and then removing portions of the buffer layer to provide regions for accommodating liquid crystal material.

Preferably the removal stage is achieved by an etching technique, for example by introducing an etchant between the electrode layers in order to etch those parts of the buffer layer which were not previously rendered etch resistant by suitable treatment dependent on the material of the buffer layer. Such treatment could be selective doping or chemical treatment or irradiation by UV light of the buffer layer.

In a preferred embodiment, the present invention provides a method of manufacturing a liquid crystal cell comprising depositing material onto a substrate layer to provide a first electrode layer, depositing material over the first electrode layer to form a buffer layer, applying material to form a second electrode layer such that the buffer layer is intermediate the two electrode layers, and then removing portions of the buffer layer to provide regions for accommodating liquid crystal material.

In this way, the present invention provides a technique for manufacturing liquid crystal cells incorporating a sequence of layer deposition steps, thereby obviating the spacing tolerance problems associated with techniques in which two plates are brought together, and the problems associated with dust accumulation. Moreover, the provision of a manufacturing technique involving only layer-deposition steps reduces or eliminates the significance of the degree of flatness of the base substrate, because slight modulations in the topography of the base substrate are replicated by the depositent layers, so that comparatively rough-faced glass can readily be utilised, rather than the highly polished (to within 0.1 μm) plates which are necessary for prior art techniques. Thus the present invention facilitates the production of large area displays because the requirements for the glass substrate are not so stringent as with prior art techniques.

The present invention also embodies a liquid crystal cell produced by the above-defined technique. Thus, for example, the present invention provides a liquid crystal cell comprising a substrate with two electrode layers having spacing means therebetween formed of a buffer layer with portions removed after deposition of the second electrode layer.

In order that the invention may more readily be understood, a description is now given, by way of example only, reference being made to the accompanying drawings, in which:-

Figures 1 to 4 show stages in the manufacturing process; and

Figure 5 is a cross-section of part of a completed liquid crystal cell;

Figure 6 is a plan view showing an intermediate stage in the manufacturing process of another embodiment;

Figures 7 to 10 show stages in the manufacturing process of the embodiment of Figure 6;

and Figure 11 shows a modification to the embodiment as shown in Figure 6.

A layer 1 of ITO is deposited on a flat glass substrate 2 to form a transparent electrode. The glass substrate need not be carefully polished to the degree necessary in conventional liquid crystal cell manufacturing (typically to within 0.1μ m variance), but instead the technique of the invention allows comparatively coarse or bumpy glass to be used without any substantial detrimental effects. In this way, the expensive and time-consuming polishing step can be eliminated, thereby ensuring that the cell of the present invention can be manufactured at low cost compared to conventional cells.

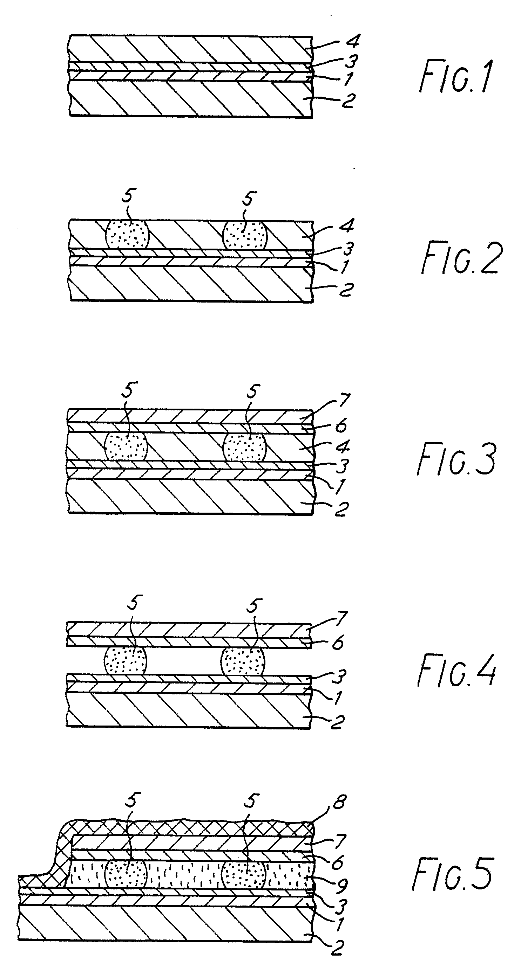

A polyimide layer 3 is deposited and rubbed or appropriately treated to form an alignment layer. Then a buffer layer 4 of 2μm of a material such as photosensitive polyimide layer or spun-on low temperature glass is deposited on alignment layer 3. A cross-section of the product at this stage is shown schematically in Figure 1. The material forming layer 4 is such that it can be easily etched by an acid, alkali or other solvent which is inert with the adjacent alignment layer, while being easily and readily converted to an etch-resistant state by suitable treatment, such as by selective doping and/or chemical treatment or irradiation, at specific spatial locations. One such material is Norland UVS 90 polyimide adhesive which is a photosensitive polyimide sensitive to UV radiation and hence can be treated by conventional photolithographic techniques to define etch-resistant portions to provide the spacers. Another such material is a standard photosensitive resist, such as Hunts A21350, - a class of materials that can be deposited, usually spun, on to a surface - which is otherwise used to photographically define the layer on which it is deposited. Such materials are known in the art and usually have detailed specifications as to the process conditions, such as temperature and time, and the solvents which are required for optimum results. As already indicated, the materials of the alignment layer 3 and the buffer layer 4 are chosen so that it is possible to treat and etch the buffer layer 4 without substantially affecting the structure of the alignment layer.

The buffer layer 4 is then treated by UV irradiation or chemical doping as appropriate in those regions 5 which are to form spacer elements between the electrode layers (see Figure 2). For example, if the buffer layer is formed of a photosensitive polymeric material it can be rendered etch-resistant by the action of UV irradiation resulting in molecular cross-linking. First, a mask pattern is made on a good quality photographic plate which is transparent in the near UV. The plate can be imaged onto the liquid crystal plate or simply placed in close proximity. when UV is irradiated through the plate, the pattern shadowed onto the liquid crystal plate is reproduced in the photosensitive polymeric layer. Before and after UV irradiation, the photosensitive material is heated or baked as required for optimum results.

The exposed surface of buffer layer 4 is rubbed or treated to ensure replication of the texture onto the further polyimide material which is subsequently deposited to form a top-coat alignment layer 6. A layer of ITO material is deposited over alignment layer 6 to form a second transparent electrode layer 7 (see Figure 3). Holes (not shown) are cut through the layers 6 and 7, to provide access for etchant to pass to buffer layer 4 where etching occurs in the undoped/untreated portions with the reactant product subsequently being removed (see Figure 4). The shape and arrangement of doped regions 5 are designed to facilitate ingress of etchant and extract of reactant product, in addition to being appropriate for the required pixel format.

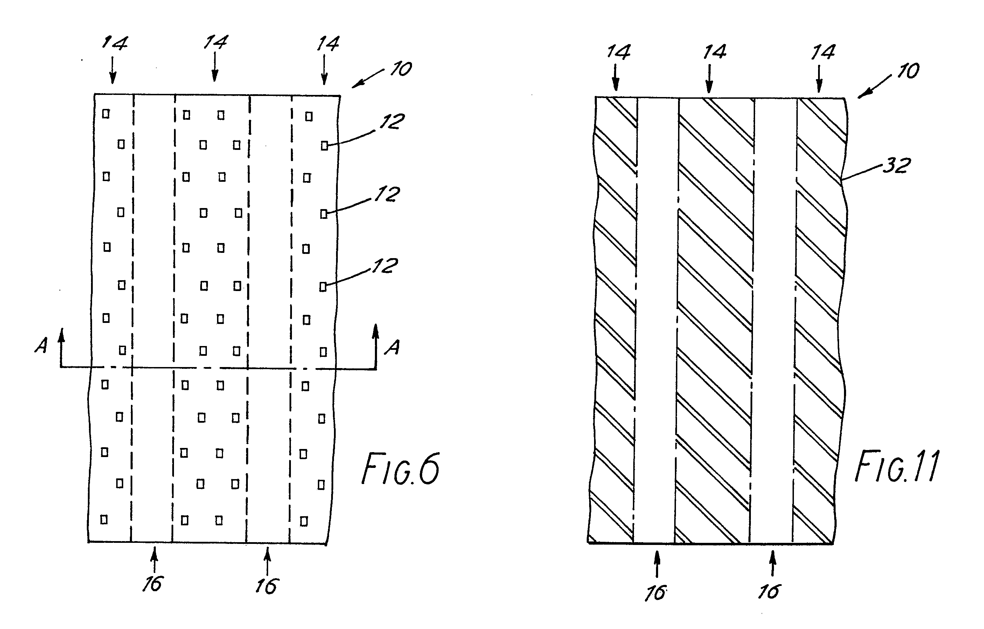

A sputter deposited sealing layer 8 is laid down or photo-defined over the upper 4/5 or so of each pixel stage, and then the pixels are filled with smectic-C ferroelectric liquid crystal material 9 by appropriate vacuum techniques. The remaining unsealed portion of the cell is sealed by sputter-deposition to produce a display device part of which is shown in Figure 5. A suitable sealing material is a sputtered or deposited glass, $SiO_x$, sputtered onto the surface, though any other glass or relatively transparent material could be used. The sealing material could also be a material, such as a conventional polymide, which could be spun on, if the spinning required is not sufficiently violent to disturb the liquid crystal material. A spun on layer would be a few microns or so thick.

Thus the present invention provides a technique for manufacturing liquid crystal cells in one integrated sequence of thin film deposition stages, and benefits from the resultant accuracy (with a tolerance of less then ±10% over large areas) and uniformity. Moreover, the technique requires only one glass plate thereby reducing the component-costs of the present invention over conventional techniques which require two plates; also, it is hard to achieve good spacing tolerance (e.g. 0.1 μm) when bringing together two plates in conventional techniques. Also the degree of flatness in that single plate is not as significant as in conventional techniques, as slight modulations in the topography of the base plate are followed or replicated by the deposited layers.

Furthermore, in conventional techniques dust particles can prevent the two plates from being brought together uniformly. In the present invention dust particles are themselves incorporated as spacers in the first display and do not contribute to yield loss, thereby permitting a less clean manufacturing environment. Also, the dust problems are an important contribution to the conventional techniques being limited to providing electrode separations of at minimum 1 μm, whereas the present invention enables electrode separations of less than 1 μm.

In the method shown in Figures 1 to 5, the buffer layer has been treated to be rendered etch-resistant prior to deposition of the top alignment layer. when the material used is a photosensitive material, the stage prior to etching at which it is rendered etch-resistant is not critical so long as the radiation used can penetrate the layers of material above the buffer layer. However if these further layers are thick, higher levels of UV radiation may be required. Dust or surface irregularities and non-conformities in layers above the buffer layer may also further complicate the UV exposure step required. For these reasons the portions of the buffer layer to be rendered etch-resistant are advantageously exposed to the radiation before subsequent layers are deposited.

A further advantage of using only one glass substrate layer is that colour filters may be provided above the final sealing layer. In prior art devices, the colour filters had to be placed between the top electrode and the glass substrate to alleviate the problem of parallax when the device is not viewed head-on.

It is apparent that the method according to the present invention can be used to form spacers positioned as in prior art liquid crystal cells. The method also makes possible other structures, e.g. as shown in Figure 6.

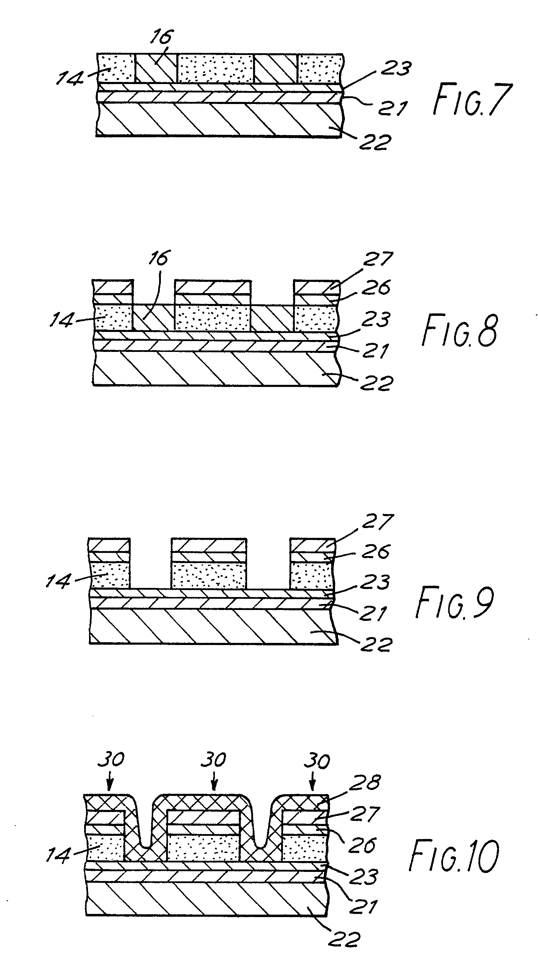

Figure 6 shows a plan view of part of a buffer layer 10 on a glass substrate (not visible). The layer 10 has been rendered etch resistant at regions 12 to form spacers - the spacers may be shaped as squares, circles or other appropriate shapes. The regions 12 are only produced in column 14 of the buffer layer; the other columns 16 not containing any etch-resistant regions 12. Figure 7 is a cross-sectional view along the line A-A of Figure 6. Figure 7 also shows the bottom alignment layer 21, the glass substrate 22 and the bottom electrode 23.

In the next processing steps, the top alignment layer 26 and top electrodes 27 are deposited but only above the columns 14 of the buffer layer 10 containing etch-resistant regions 12, as shown in Figure 8. When the buffer layer 10 is etched, only those etch resistant regions 12 remain. Figure 9 is a schematic representation showing that the columns 16 have been removed in the etching step; the individual spacers produced in the columns 14 have not been shown for reasons of clarity.

A sealing layer 28 is then laid over the assembly so produced as shown in Figure 10, so defining separate columns 30 each containing a top electrode 27. A hole (not shown) is left in the sealing layer 28 for each column 30 so that the liquid crystal device can be back-filled with liquid crystal material. This embodiment has the further advantage that the volume to be filled from each hole by liquid crystal material is reduced and so the step of filling the device with liquid crystal material is made simpler.

An alternative embodiment is shown in Figure 11. This is similar to the embodiment at the stage shown in Figure 6 and so like parts are designated by like reference numerals. However in this embodiment, the spacers are shown as stripes 32 in the columns 14. A liquid crystal cell provided with such spacers is filled with liquid crystal material before the final sealing layer is applied. The device is immersed or otherwise covered with liquid crystal material, capillary action drawing the liquid crystal material into the spaces between the spacers. After this, the device is drained, the liquid crystal material in the columns 14 being retained by the force of capillary action. A final sealing layer is then provided.

## Claims

1. A method of manufacturing a liquid crystal cell comprising the steps of:
applying material over a first electrode layer on a substrate to form a buffer layer;
applying material to form a second electrode layer such that the buffer layer is intermediate the first and second electrode layers;
and then, removing portions of the buffer layer to provide regions for accommodating liquid crystal material.

2. A method according to Claim 1 comprising the steps of:
depositing material onto a substrate layer to provide the first electrode layer;
depositing material over the first electrode layer to form a buffer layer;
applying material over the first electrode layer to form a buffer layer;
applying material to form a second electrode layer such that the buffer layer is intermediate the first and second electrode layers;
and then removing portions of the buffer layer to provide regions for accommodating liquid crystal material.

3. A method according to Claims 1 or 2 wherein each step of applying a material comprises the step of depositing said a material.

4. A method according to any one of the preceding claims wherein the removing step is achieved by an etching technique.

5. A method according to Claim 4 wherein the removing step comprises the steps of rendering etch-resistant part of the buffer layer and then introducing an etchant between the first and second layers to etch those parts of the buffer layer not rendered etch resistant.

6. A liquid crystal cell when manufactured by the method according to any one of Claims 1 to 5.

7. A liquid crystal cell comprising a substrate with first and second electrode layers having spacing means therebetween formed of a buffer layer with portions removed.

FIG.1

FIG.2

FIG.3

FIG.4

FIG.5

14    14    14    10
12
12
12
A    A

16    16

FIG.6

14    14    14    10
32

16    16

FIG.11

EP 0 345 046 A2

FIG.7

FIG.8

FIG.9

FIG.10